# EUROPÄISCHE PATENTSCHRIFT

(11) **EP 1 519 203 B1**
(45) Veröffentlichungstag und Bekanntmachung des Hinweises auf die Patenterteilung: **20.12.2006**
(21) Anmeldenummer: 04104484.3
(22) Anmeldetag: 16.09.2004
(51) Int. Cl.: G01S 7/40

(54) **Verfahren zur Ermittlung von Messeigenschaften einer Radar-Sensoreinrichtung eines Kraftfahrzeuges**
Method for the determination of the measuring characteristics of a radar sensor of a motor vehicle
Procédé de détermination des qualités de mesure d'un dispositif à capteur radar d'une automobile

(30) Priorität: 25.09.2003 DE 10344617
(43) Veröffentlichungstag der Anmeldung: 30.03.2005
(73) Patentinhaber: ROBERT BOSCH GMBH, 70442 Stuttgart (DE)
(72) Erfinder: Klar, Michael, 71106, Magstadt (DE)

(56) Entgegenhaltungen:
- EP-A- 1 074 853
- EP-A- 1 278 075
- DE-A- 10 055 457
- DE-A- 19 953 790
- US-A- 5 285 207
- US-A- 5 959 570

## Beschreibung

Die Erfindung bezieht sich auf ein Verfahren zur Ermittlung von Messeigenschaften einer Radar-Sensoreinrichtung eines Kraftfahrzeuges nach Anspruch 1. Ein solches Verfahren gemäß dem Oberbegriff des Anspruchs 1 ist bekannt aus der EP-A-1278075.

Radar-Sensoreinrichtungen werden von Fahrzeugen für unterschiedliche Funktionen verwendet. Hierbei wird z.B. im Frontbereich des Fahrzeugs ein Short-Range-Radar (SRR) zur Bestimmung von Entfernungen und Relativgeschwindigkeiten von Objekten verwendet, dessen Messsignale für Fahrerunterstützungsfunktionen, z.B. eine Precrash-Funktion, eine AutomaticCruiseControl (ACC) oder eine Einparkhilfe verwendet werden können. Hierbei werden typischerweise Frequenzen von ca. 24 GHz mit Laufzeitbestimmungen durch HF-Pulse von z.B. 400 ps Breite verwendet.

Bei derartigen Funktionen wird eine vollständige Funktionsfähigkeit des Sensors vorausgesetzt, damit nicht bei fälschlichem Erkennen einer Precrash-Situation unberechtigterweise passive Sicherheitsfunktionen wie pyrotechnische Gurtstraffer oder Airbags aktiviert werden oder aktive Sicherheitsfunktionen wie ein Eingriff in die Motorsteuerung, Lenkeinrichtung oder Bremseinrichtung vorgenommen werden. Derartige Radar-Sensoreinrichtungen weisen jedoch nur eine begrenzte Lebensdauer auf und können insbesondere von Ausfällen oder Alterungserscheinungen betroffen sein. Bei Alterungserscheinungen tritt insbesondere ein Verlust der Empfindlichkeit des Sensors auf, der im zeitlichen Verlauf langsam zunehmen oder auch abrupt auftreten kann. Hierdurch sind die auf den Messsignalen der Radar-Sensoreinrichtungen beruhenden Fahrerunterstützungsfunktionen von einer gewissen Ungenauigkeit und Fehlerhaftigkeit betroffen.

Aus der DE 199 53 790 A ist ein Radarverfahren zur Erfassung von bewegten oder festen Objekten in Kursverlauf eines Fahrzeuges bekannt, wobei diese Objekte nach Abstand und Relativgeschwindigkeit diskriminiert werden und diesen Objekten entsprechend ihrer Eigengeschwindigkeit bestimmte Objektklassen zugeordnet werden.

Aus der US-A-5959570 ist es bekannt, Objekte lediglich in einem vorgegebenen Abstandsintervall zu untersuchen.

Das erfindungsgemäße Verfahren weist insbesondere den Vorteil auf, dass eine Verschlechterung von Eigenschaften einer Radar-Sensoreinrichtung aus ihren Messsignalen ermittelt werden kann. Hierbei sind vorteilhafterweise keine weiteren Daten oder z.B. lediglich ergänzend im Fahrzeug bereits vorhandene Daten, z.B. aus einem fahrzeuginternen Bus entnommene Fahrzustandsinformationen, zur Beurteilung der Eigenschaften der Sensoreinrichtung erforderlich. Hierbei kann nicht nur ein Totalausfall der Sensoreinrichtung, bei der keine Fehlererkennung mehr möglich ist, sondern auch eine geringere, insbesondere auch eine allmählich zunehmende Verschlechterung einer Sensorperformance erkannt werden.

Gemäß einer bevorzugten Ausbildung kann auch zwischen Verschlechterungen der Sensoreigenschaften und weiterer die Messungen beeinflussender Auswirkungen, z.B. einer Verschmutzung der Karosserieoberfläche, differenziert werden. Das erfindungsgemäße Verfahren kann vorteilhafterweise ohne wesentlich höheren Rechenaufwand von der Steuereinrichtung der Sensoreinrichtung selbst oder einer anderen, ohnehin vorhandenen Steuereinrichtung im Fahrzeug, z.B. dem Cluster-Steuergerät oder einer zentralen Steuereinrichtung der Fahrdynamikregelung, vorgenommen werden. Die Beurteilung der Sensoreigenschaften kann insbesondere auch nach Erfassung von Objekten oder in anderen zeitlichen Phasen durchgeführt werden, in denen keine Rechenbelastung des betreffenden Steuergeräts vorliegt.

Der Erfindung liegt der Gedanke zugrunde, zur Bestimmung der Empfindlichkeit der Radar-Sensoreinrichtung - insbesondere eines SRR-Sensors - ein Referenzziel mit bekanntem oder abschätzbaren Radarrückstreuquerschnitt (RCS) zu ermitteln und einen zeitlichen Verlauf der auftretenden Änderungen der Radarrückstreuquerschnitte von entsprechenden Objekten als Verschlechterung einer Sensoreigenschaft zu erkennen. Somit werden lediglich relevante Objekte aus einer Vielzahl erfasster Objekte im Umfeld des Fahrzeuges ausgesucht.

Hierbei werden die erfassten Objekte Objektklassen zugeordnet, um relevante Objektklassen zu bilden. Bei der Ermittlung der Objektklasse des erfassten Objekts aus zumindest der Eigengeschwindigkeit des Fahrzeugs und der Relativgeschwindigkeit des erfassten Objekts können hierbei zunächst nicht relevante Objektklassen durch einfache Überlegungen ausgeschlossen werden. Hierzu werden erfindungsgemäß Intervallbereiche bzw. Fenster für verschiedene Beurteilungskriterien gebildet, nämlich die Eigengeschwindigkeit des Fahrzeugs und die Relativgeschwindigkeit des erfassten Objektes sowie gegebenenfalls zusätzlich auch den Abstand des Objektes.

Indem die Eigengeschwindigkeit des Fahrzeugs hinreichend hoch gewählt wird, können z.B. Einparkvorgänge und langsame Fahrten durch Fußgängerbereiche für die Entscheidungsfindung ausgeschlossen werden. Es kann insbesondere eine Begrenzung auf Landstraßen oder Autobahnen erfolgen, in denen üblicherweise als weitere Verkehrsteilnehmer PKWs, Motorräder und/oder LKWs betrachtet werden. Weiterhin wird als entscheidendes Kriterium zumindest eine Relativgeschwindigkeit des erfassten Objektes herangezogen, die vorteilhafterweise in einem relativ geringem Bereich liegt, so dass PKWs, Motorräder oder LKWs erkannt werden können, die typische Radarrückstreuquerschnitte aufweisen. Als weiteres Fenster kann z.B. ein Objektabstandsfenster verwendet werden, da bei vorgegebenen Abständen ggf. die Berechnung der Rückstreuquerschnitte vereinfacht dargestellt werden kann.

Erfindungsgemäß werden die erfassten Objekte hierbei verschiedenen Objektklassen zugeordnet, die für sich genommen jeweils typische Radarrückstreuquerschnittsbereiche aufweisen. Die Objektklassen der Verkehrsschilder und der Leitplanken können z.B. aufgrund fehlender Eigengeschwindigkeit erkannt und ausgeschlossen werden. Fußgänger können ebenfalls aufgrund ihrer Eigengeschwindigkeit unterhalb eines Grenzwertes von z. B. 10 km/h erkannt werden. LKWs, PKWs und Motorräder besitzen höhere Eigengeschwindigkeiten. Eine Differenzierung zwischen den Objektklassen der LKWs, der PKWs und der Motorräder kann aufgrund deren voneinander stark abweichender, von den LKWs über PKWs zu Motorrädern hin abnehmenden Rückstreuquerschnitte vorgenommen werden. Vorzugsweise werden lediglich die Objektklassen der PKWs, LKWs und Motorräder als relevant herangezogen, da z.B. die Objektklassen der Verkehrsschilder und der Leitplanken durch weitere stehende Objekte, z.B. auch PKWs und LKWs leichter verfälscht werden können.

Weiterhin können fahrzeuginterne Signale, z. B. Signale über das Lenkverhalten oder eine Drehrate des Fahrzeuges, herangezogen werden, damit nicht während eines Abbiegevorganges oder einer Kurvenfahrt gemessene, untypische Messsignale herangezogen werden.

Nachdem ein Objekt einer Objektklasse zugeordnet ist, kann aus der Peakamplitude des Messsignals des Objektes und der Objektentfernung ein Rückstreuquerschnitt durch Abschätzung ermittelt werden. Es wird somit eine zeitliche Folge von Objektdaten jeder Objektklasse gebildet. Hierzu wird vorteilhafterweise eine Mittelung über z.B. zehn Messungen für die weiteren Auswertungen vorgenommen.

Erfindungsgemäß wird nun der zeitliche Verlauf der Objektdaten zumindest einer Objektklasse, vorteilhafterweise mehrerer Objektklassen, betrachtet. Falls die Sensorperformance sich nicht ändert und keine weiteren Verschlechterungen auftreten, sollte mit statistischer Abweichung der mittlere Rückstreuquerschnitt im Allgemeinen konstant bleiben. Bei einer Verschlechterung der Sensorperformance werden die Rückstreuquerschnitte der Objekte einer Objektklasse im Laufe der Zeit kleiner.

Weiterhin kann als Zusatzinformation eine Überprüfung der Auftretenshäufigkeit bzw. -wahrscheinlichkeit der verschiedenen Objektklassen vorgenommen werden, so dass z. B. ein fehlerhaftes häufigeres Erkennen der Objektklasse der Motorräder und ein selteneres Erkennens der Objektklasse der LKWs oder PKWs ebenfalls als Verringerung der Sensorperformance aufgrund fälschlicherweise zu gering angenommener Rückstreuquerschnitte erkannt wird.

Weiterhin kann der Anfangsübersprecher der Peakamplitude des Messsignals, der durch eine Überkopplung von Sendeleistung im Nahbereich von der Sendeantenne direkt in die Empfangsantenne erzeugt wird, zur Beurteilung der Sensoreigenschaften herangezogen werden, um eine Differenzierung einer Verschlechterung der Messungen durch interne Fehler der Sensoreinrichtung oder durch externe Einflüsse vorgenommen werden. Werden sowohl die Amplitude des Anfangsübersprechers als auch die geschätzten Rückstreuquerschnitte der Objekte im Laufe der Zeit kleiner, liegt voraussichtlich eine Verschlechterung der Sensorperformance vor, die wahrscheinlich interne Ursachen hat.

Erfindungsgemäß wird vorteilhafterweise ein ermittelter Fehler bzw. eine ermittelte Verschlechterung der Sensorperformance intern in einem Speicher für spätere Wartung abgespeichert und/oder ein Fehlersignal dem Fahrer angezeigt.

Die Erfindung wird im Folgenden anhand der beiliegenden Zeichnungen an einigen Ausführungsformen erläutert. Es zeigen:
- Fig. 1: ein Fahrzeug mit einer Radar-Sensoreinrichtung auf einer Fahrbahn;
- Fig. 2: ein Flussdiagramm eines erfindungsgemäßen Verfahrens gemäß einer Ausführungsform;
- Fig. 3: ein Flussdiagramm eines Verfahrens gemäß einer weiteren Ausführungsform.

Ein Kraftfahrzeug 1 fährt auf der linken Fahrspur 2 einer zweispurigen Fahrbahn 3, z. B. einer Autobahn mit einer Geschwindigkeit v1. Das Fahrzeug 1 überholt ein auf der rechten Fahrspur 4 mit einer geringeren Geschwindigkeit v2 fahrendes Fahrzeug 5. Eine Radarsensoreinrichtung 6 des Fahrzeugs 1 weist einen Sender 9, der Radarstrahlen R aussendet, und einen Empfänger 10 auf, der von dem weiteren Fahrzeug 5 und anderen Objekten, z.B. einem Verkehrsschild 11 neben der Fahrbahn 3, reflektierte Radarstrahlen empfängt. Die Sensoreinrichtung 6 kann hierbei insbesondere auf einer Laufzeitauswertung basieren und in an sich bekannter Weise Radarrückstreuquerschnitte (RCS) der Objekte auswerten, wobei z. B. der Winkelbereich, Amplitude und Intensität des vom Empfänger 10 aufgenommenen Radarsignals des Fahrzeugs 5 ermittelt werden können.

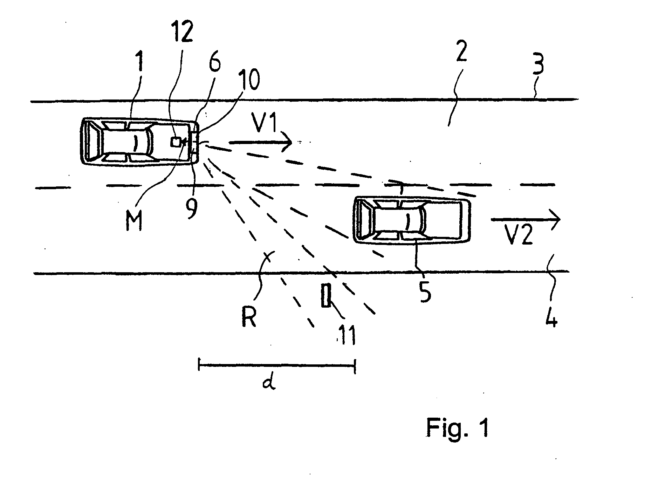

Eine Steuereinrichtung 12 zur Aufnahme und Auswertung der Messsignale M von dem Empfänger 10 ist in der Radarsensoreinrichtung 6 integriert oder wie in Figur 1 gezeigt außerhalb der Sensoranordnung 6 vorgesehen. Aus den Messsignalen M wird eine Objektliste 14 gebildet, in denen zu den einzelnen erfassten Objekten 5, 11 Objektdaten 0 über deren Relativgeschwindigkeit vr, den Abstand d des Objektes 5, die Eigengeschwindigkeit v1 des Fahrzeugs 1 und über die Amplitude bzw. Intensität und den Winkelbereich des Messsignals M gespeichert werden.

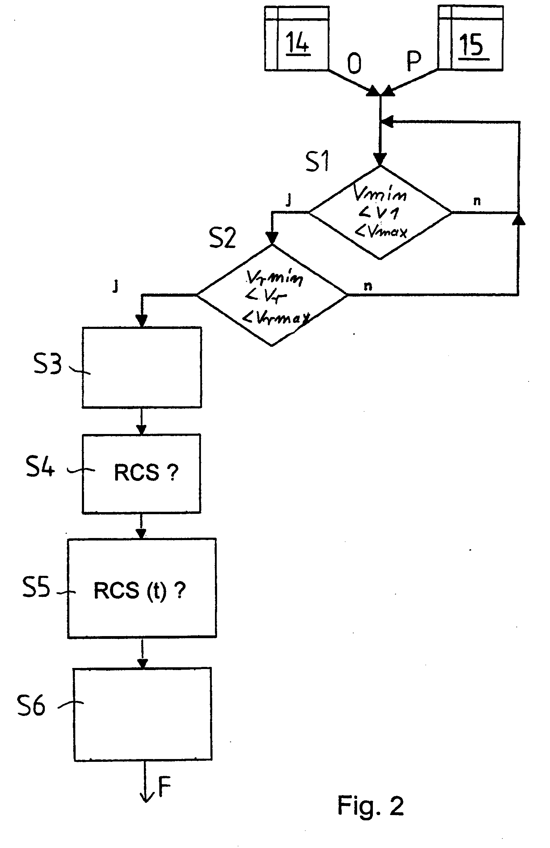

Gemäß Figur 2 wird von der Steuereinrichtung 12 z. B. in regelmäßigen Zeitintervallen oder jeweils nach Erfassung eines weiteren Objektes 11, 5 eine Überprüfung der Sensorperformance vorgenommen. Hierzu werden aus der Objektliste 14 sukzessive Objekte O entnommen. Weiterhin werden aus einer Peakliste 15 Vergleichspeaks P herangezogen. In den Schritten S1 bis S3, eventuell auch noch in S4, wird eine Klassifizierung des Objektes 0 in Objektklassen Oi durchgeführt mit z. B. i= (a Verkehrsschilder, b Leitplanken, c Fußgänger,) d LKWs, e PKWs, f Motorräder, g weitere Objekte.
Hierbei ist eine Klassifizierung in a, b, c allerdings nicht so relevant und kann weggelassen werden.
In der gezeigten Ausführungsform sollen nur Objektklassen der PKWs, LKWs und/oder Motorräder ermittelt werden.

In Schritt S1 wird zunächst überprüft, ob die Eigengeschwindigkeit v1 des Fahrzeugs 1 in einem vorgegebenen Geschwindigkeitsintervall liegt, d. h. ob vmin < v1 < vmax ist. Falls dies nicht der Fall ist, wird zu einem späteren Zeitpunkt überprüft bzw. das Verfahren abgebrochen. Falls v1 in dem Intervall vmin, vmax liegt, wird im nachfolgenden Entscheidungsschritt S2 überprüft, ob die Relativgeschwindigkeit vr des Objektes O in einem zweiten Geschwindigkeitsintervall vrmin, vrmax liegt, d. h. ob vrmin < V2 < vrmax ist. Ist dies nicht der Fall, wird das Verfahren ebenfalls abgebrochen. Andernfalls wird erkannt, dass aufgrund der Fahrsituation des Fahrzeuges 1 und des weiteren Objekts eine Performanceüberprüfung sinnvoll ist. Erfindungsgemäß können z. B. die Intervallgrenzen {vmin, vmax} als {80, 100 km/h} und {vrmin, vrmax} als {-2 km/h, + 2 km/h} herangezogen werden, so dass ggf. das weitere Fahrzeug 5, nicht jedoch das Verkehrsschild 11 als relevantes Objekt O erkannt wird.

Bei Erkennen eines relevanten Objektes O werden in einem nachfolgenden Bearbeitungsschritt S3 weitere Klassifizierungsmerkmale geprüft. Hierbei können insbesondere die Amplitude des Messsignals M in Abhängigkeit von dem aus der Signallaufzeit ermittelten Objektabstand d und die Winkelbreite des erfassten Verkehrsobjektes 5 überprüft werden. Weiterhin können zusätzliche Fenster herangezogen werden, z. B. Objektentfernungsfenster mit der erforderlichen Bedingung dmin < d < dmax für den Objektabstand d.

Anschließend wird in dem Bearbeitungsschritt S4 der Radarrückstreuquerschnitt RCS aus der durch das Objekt erzeugten Peakamplitude und dem Abstand d des Objektes geschätzt. RCS kann hierbei ergänzend herangezogen werden, um eine genauere Einteilung in eine Objektklasse zu ermöglichen bzw. auszuschließen.

In einem nachfolgenden Schritt S5 wird der zeitliche Verlauf der geschätzten RCS für verschiedene Objektklassen gebildet, z. B. durch Differenzenbildung.

In dem nachfolgenden Bearbeitungsschritt S6 wird die zeitliche Veränderung der geschätzten Radarrückstreuquerschnitte jeder Objektklasse ausgewertet. Hierbei wird überprüft, ob eine fortlaufend zeitliche Veränderung durch Abnahme des RCS in jeder oder einigen relevanten Objektklassen vorliegt. Falls sich in einer Objektklasse der ermittelte RCS zeitlich verringert, kann auf eine Verschlechterung der Sensorperformance geschlossen werden.

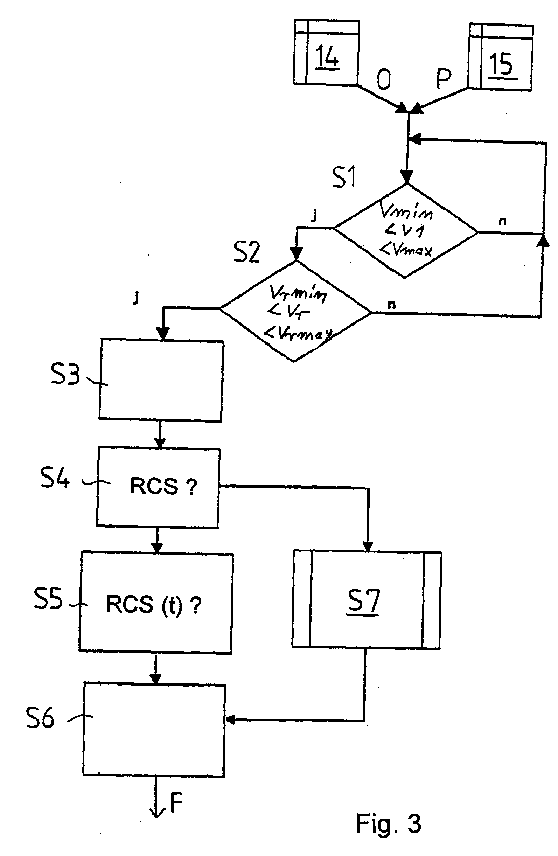

Gemäß der in Figur 3 gezeigten Ausführungsform wird im Anschluss an den Schritt S4 zusätzlich in einem Bearbeitungsschritt S7 die Auftretenshäufigkeit bzw. - wahrscheinlichkeit der verschiedenen Objektklassen ermittelt. Herbei kann bei Abnahme der Auftretenshäufigkeit einer Objektklasse vorteilhafterweise auf eine Fehlfunktion geschlossen werden.

In beiden Ausführungsformen der Figuren 2, 3 kann als Ergebnis des Schrittes S6 nachfolgend z. B. ein Fehlersignal F für eine Anzeigeeinrichtung im Cockpitbereich des Fahrers ausgegeben werden, wenn eine deutliche Verschlechterung der Performance des Sensors ermittelt wird; entsprechend kann das Signal F auch in einem internen Speicher abgespeichert und bei den regelmäßigen Wartungen abgerufen und zur Entscheidung über ggf. eine Reinigung oder einen Austausch des Sensors herangezogen werden.

Ergänzend kann erfindungsgemäß das Verfahren auch auf den Anfangsübersprecher im Messsignal M herangezogen werden. Der Anfangsübersprecher kann bei einer Laufzeitmessung ermittelt werden als Peakerhöhung beim zeitlichen Anfang des Signals und resultiert überwiegend aus der Überkopplung von Sendeleistungen im Nahbereich, insbesondere noch hinter der Karosserie, von der Sendeantenne direkt in die Empfangsantenne. Wird der zeitliche Verlauf des erfindungsgemäß ermittelten geschätzten RCS des Anfangsübersprechers überwacht und dessen Änderungsverhalten von dem Verhalten externer Objekte abweichen, so sind weitere Aussagen möglich, insbesondere:

Falls zum einen der aus der Amplitude des Messsignals M geschätzte RCS des Anfangsübersprechers konstant und die geschätzten RCS der Objektklassen Oa bis Og immer kleiner werden, so liegt wahrscheinlich eine Verschmutzung der Karosserieoberfläche vor, so dass mit dem Fehlersignal F eine Verschmutzung und ein Hinweis für eine Reinigung des Fahrzeugs an den Fahrer ausgegeben werden können.

Wird zum anderen die Amplitude des Anfangsübersprechers kleiner, und weiterhin auch die RCS der externden Objekte 5, 11, die aus den Peaks des Messsignals M hinter dem Anfangsübersprecher geschätzt werden, geringer, so liegt eine Verschlechterung der Sensorperformance vor, die wahrscheinlich interne Ursachen der Radar-Sensoreinrichtung 6 hat. Dies kann sowohl im Sender 9 als auch im Empfänger 10 vorliegen. Unterschreitet die Empfindlichkeit des Sensors einen entsprechenden Schwellwert, so muss in dem Fehlersignal F angezeigt werden, dass es die Werkstatt aufgesucht und der Sensor 6 ausgetauscht wird.

## Patentansprüche

1. Verfahren zur Ermittlung von Messeigenschaften einer Radar-Sensoreinrichtung (6) eines Fahrzeuges (1), mit mindestens folgenden Schritten:
Erfassen eines Objektes (5, 11) mittels der Radar-Sensoreinrichtung (6) und Ausgabe von Messsignalen (M),
Ermitteln zumindest einer Eigengeschwindigkeit (v1) des Fahrzeuges (1) und einer Relativgeschwindigkeit (vr) des Objektes (5, 11),
Ermitteln einer Objektklasse (Oi, i=a,b,c,d,e,f,g) des erfassten Objektes (5, 11) aus zumindest der Eigengeschwindigkeit (v1) des Fahrzeugs (1) und der Relativgeschwindigkeit (vr) des erfassten Objekts (5, 11),
Ermitteln eines Radarrückstreuquerschnittes (RCS) des Objektes (5) aus den Messsignalen, falls es in einer relevanten Objektklasse (Od, Oe, Of) ist,
Ermitteln eines zeitlichen Verlaufs der ermittelten Radarrückstreuquerschnitte (RCS) einer Folge mehrerer Objekte zumindest einer relevanten Objektklasse (Od, Oe, Of), und
Feststellen einer Fehlereigenschaft der Sensoreinrichtung (6) bei statistisch signifikanter zeitlicher Verringerung der Radarrückstreuquerschnitte (RCS) der **Objekte der relevanten Objektklasse,**
**dadurch gekennzeichnet, dass** die Objektklasse ermittelt wird aus einem vorgegebenen Intervall (vmin, vmax) der Eigengeschwindigkeit (v1) und einem vorgegebenen Intervall (vrmin, vrmax) der Relativgeschwindigkeit (vr) des erfassten Objektes (5, 11).

2. Verfahren nach Anspruch 1, **dadurch gekennzeichnet, dass** der Radarrückstreuquerschnitt (RCS) des Objektes (5) durch eine Langzeitmessung, insbesondere durch eine Mittelung aus mehreren Messungen, gebildet wird.

3. Verfahren nach Anspruch 1, **dadurch gekennzeichnet, dass** eine Unterteilung der erfassten Objekte in zumindest Objektklassen der Fußgänger (Oc), LKWs (Od), PKWs (Oe) und Motorräder (Of) erfolgt.

4. Verfahren nach Anspruch 2, **dadurch gekennzeichnet, dass** lediglich die Objektklassen der LKWs (Od) und/oder PKWs (Oe) und/oder Motorräder (Of) als relevante Objektklassen herangezogen werden.

5. Verfahren nach einem der vorherigen Ansprüche, **dadurch gekennzeichnet, dass** der Radarrückstreuquerschnitt (RCS) aus der Peakamplitude des Messsignals (M) und einem ermittelten Objektabstand (d) des Objektes ermittelt wird.

6. Verfahren nach einem der vorhergehenden Ansprüche, **dadurch gekennzeichnet, dass** eine Auftrittshäufigkeit der verschiedenen Objektklassen (Oi) ermittelt und zur Beurteilung einer Fehlereigenschaft der Sensoreinrichtung (6) herangezogen wird.

7. Verfahren nach Anspruch 5, **dadurch gekennzeichnet, dass** eine Zusatzinformation gewonnen wird, indem bei einer Verringerung des Auftretens von Objekten der Objektklassen der LKWs (Od) gegenüber der Objektklassen der PKWs (Oe) und/oder einer Verringerung der Häufigkeit des Auftritts der Objektklasse der PKWs (Oe) gegenüber der Objektklasse der Motorräder (Of) und/oder einer Verringerung der Häufigkeit des Auftretens von Objekten der Objektklasse der LKWs (Od) gegenüber der Objektklasse der Motorräder (Of) auf einer Verschlechterung einer Sensoreigenschaft der Radar-Sensoreinrichtung (6) geschlossen wird.

8. Verfahren nach einem der vorherigen Ansprüche, **dadurch gekennzeichnet, dass** ein Anfangsbereich des Messsignals (M) überprüft wird, eine Erhöhung der Amplitude des Messsignals (M) als Anfangsübersprecher ermittelt wird und Änderungen des Anfangsübersprechers der Messsignale ermittelt werden.

9. Verfahren nach Anspruch 8, **dadurch gekennzeichnet, dass** in dem Fall, dass die zeitliche Verringerung des Anfangsübersprechers der Amplituden der Messsignale (M) der Folge von Objekten geringer ist als die zeitliche Verringerung der ermittelten Rückstreuquerschnitte (RCS) der Folge von Objekten, eine Verschmutzung der Karosserie erkannt wird.

10. Verfahren nach Anspruch 8 oder 9, **dadurch gekennzeichnet, dass** in dem Fall, dass sowohl die Amplitude des Anfangsübersprechers des Messsignals (M) der Folge von Objekten als auch die ermittelten Radarrückstreuquerschnitte (RCS) der Folge von Objekten zumindest einer Objektklasse geringer werden, eine Verschlechterung der Sensormessgenauigkeit vorliegt.

11. Verfahren nach einem der vorherigen Ansprüche, **dadurch gekennzeichnet, dass** bei Ermittlung einer Fehlereigenschaft des Sensors und/oder einer Verschmutzung der Karosserie ein Fehlersignal (F) ausgegeben wird.

12. Verfahren nach einem der vorherigen Ansprüche, **dadurch gekennzeichnet, dass** lediglich Objekte (5, 11) in einem vorgegebenen Abstandsintervall untersucht werden.

13. Verfahren nach einem der vorherigen Ansprüche, **dadurch gekennzeichnet, dass** fahrzeuginterne Signale, z.B. Signale über das Lenkverhalten oder eine Drehrate des Fahrzeuges, verwendet werden zu der Beurteilung, ob ein erfasstes Objekt untersucht wird.

## Claims

1. Method for determination of measurement characteristics of a radar sensor device (6) in a vehicle (1), having at least the following steps:
detection of an object (5, 11) by means of the radar sensor device (6), and outputting of measurement signals (M),
determination of at least one own velocity (v1) of the vehicle (1) and of a relative velocity (vr) of the object (5, 11),
determination of an object class (Oi, i=a,b,c,d,e,f,g) of the detected object (5, 11) from at least the own velocity (v1) of the vehicle (1) and the relative velocity (vr) of the detected object (5, 11),
determination of a radar cross section (RCS) of the object (5) from the measurement signals if it is in a relevant object class (Od, Oe, Of),
determination of a time profile of the determined radar cross sections (RCS) of a sequence of a plurality of objects in at least one relevant object class (Od, Oe, Of),
and
definition of a fault characteristic of the sensor device (6) in the event of statistically significant time shortening of the radar cross sections (RCS) of the objects in the relevant object class,
**characterized in that** the object class is determined from a predetermined interval (vmin, vmax) of the own velocity (v1) and a predetermined interval (vrmin, vrmax) of the relative velocity (vr) of the detected object (5, 11).

2. Method according to Claim 1, **characterized in that** the radar cross section (RCS) of the object (5) is formed by long-term measurement, in particular by averaging over a plurality of measurements.

3. Method according to Claim 1, **characterized in that** the detected objects are subdivided into at least object classes for pedestrians (Oc), goods vehicles (Od), passenger vehicles (Oe) and motorcycles (Of).

4. Method according to Claim 2, **characterized in that** only the object classes for goods vehicles (Od) and/or passenger vehicles (Oe) and/or motorcycles (Of) are used as relevant object classes.

5. Method according to one of the preceding claims, **characterized in that** the radar cross section (RCS) is determined from the peak amplitude of the measurement signal (M) and a determined object distance (d) of the object.

6. Method according to one of the preceding claims, **characterized in that** a probability of occurrence of the various object classes (Oi) is determined, and is used to assess a fault characteristic of the sensor device (6).

7. Method according to Claim 5, **characterized in that** additional information is obtained **in that**, on reduction of the occurrence of objects in the object classes for goods vehicles (Od) with respect to the object classes for passenger vehicles (Oe) and/or a reduction in the probability of occurrence of the object class of passenger vehicles (Oe) with respect to the object class of motorcycles (Of), and/or a reduction in the probability of occurrence of objects in the object class of goods vehicles (Od) with respect to the object class of motorcycles (Of) is deduced from a deterioration in a sensor characteristic of the radar sensor device (6).

8. Method according to one of the preceding claims, **characterized in that** an initial area of the measurement signal (M) is checked, an increase in the amplitude of the measurement signal (M) is determined as initial crosstalk, and changes in the initial crosstalk of the measurement signals are determined.

9. Method according to Claim 8, **characterized in that**, in the situation in which the time shortening of the initial crosstalk of the amplitudes of the measurement signals (M) in the sequence of objects is less than the time shortening of the determined radar cross sections (RCS) of the sequence of objects, dirt on the bodywork is identified.

10. Method according to Claim 8 or 9, **characterized in that**, in the situation in which both the amplitude of the initial crosstalk of the measurement signal (M) of the sequence of objects and the determined radar cross sections (RCS) of the sequence of objects of at least one object class become smaller, the sensor measurement accuracy deteriorates.

11. Method according to one of the preceding claims, **characterized in that** a fault signal (F) is emitted on determination of a fault characteristic of the sensor and/or dirt on the bodywork.

12. Method according to one of the preceding claims, **characterized in that** only objects (5, 11) in a predetermined distance interval are investigated.

13. Method according to one of the preceding claims, **characterized in that** vehicle-internal signals, for example signals relating to the steering response or a rotation rate of the vehicle, are used for the assessment as to whether a detected object is investigated.

## Revendications

1. Procédé de détermination des qualités de mesure d'un dispositif à capteur radar d'une automobile (1), présentant les étapes suivantes :
- détection d'un objet (5,11) au moyen d'un dispositif à capteur radar (6) et délivrance de signaux de mesure (M),
- détermination d'au moins une vitesse propre (v1) du véhicule (1) et d'une vitesse relative (vr) de l'objet (5, 11),
- détermination d'une classe d'objet (Oi avec i = a, b, c, d, e, f) de l'objet détecté (5, 11) à partir d'au moins la vitesse propre (v1) du véhicule (1) et de la vitesse relative (vr) de l'objet détecté (5, 11),
- détermination d'une section de rétrodiffusion (RCS) de l'objet (5) à partir de signaux de mesure, dans le cas où cet objet appartient à une classe d'objets (Od, Oe, Of) intéressante,
- détermination de l'évolution dans le temps des sections de rétrodiffusion (RCS) établies pour une série de plusieurs objets appartenant à au moins une classe d'objets (Od, Oe, Of) intéressante,
- détermination d'un caractère défectueux du dispositif à capteur (6) dans le cas d'une réduction statistiquement significative dans le temps des sections de rétrodiffusion (RCS) des objets de la classe intéressante,
**caractérisé en ce que**
la classe intéressante est déterminée à partir d'un intervalle prédéfini (vmin, vmax) de la vitesse propre (v1) et d'un intervalle prédéfini (vrmin, vrmax) de la vitesse relative (vr) de l'objet détecté (5, 11).

2. Procédé selon la revendication 1,
**caractérisé en ce que**
la section de rétrodiffusion (RCS) de l'objet (5) est établie par une mesure de longue durée, notamment en établissant la moyenne de plusieurs mesures.

3. Procédé selon la revendication 1,
**caractérisé en ce que**
les objets détectés sont divisés en au moins des classes d'objet, à savoir (Oc) pour les piétons, (Od) pour les véhicules utilitaires, (Oe) pour les véhicules de tourisme, (Of) pour les motocyclettes.

4. Procédé selon la revendication 2,
**caractérisé en ce que**
seules les classes d'objet des véhicules utilitaires (Od) et/ou des véhicules de tourisme (Oe) et/ou des motocyclettes (Of) sont retenues comme classes intéressantes.

5. Procédé selon une des revendications précédentes,
**caractérisé en ce que**
la section de rétrodiffusion (RCS) est déterminée à partir de l'amplitude du pic du signal de mesure (M) et de la distance déterminée (d) de l'objet.

6. Procédé selon une des revendications précédentes,
**caractérisé en ce que**
la fréquence d'apparition des différentes classes d'objet (Oi) est établie et retenue pour apprécier le caractère défectueux du dispositif à capteur (6).

7. Procédé selon la revendication 5,
**caractérisé en ce qu'**
une information supplémentaire est obtenue, à savoir qu'en présence d'une réduction de l'apparition d'objets de la classe des véhicules utilitaires (Od) par rapport à la classe d'objets de la classe des véhicules de tourisme (Oe) et/ou une réduction de la fréquence d'apparition de la classe d'objets (Oe) des véhicules de tourisme par rapport à la classe d'objets (Of) des motocyclettes et/ou une réduction de la fréquence d'apparition d'objets de la classe (Od) des véhicules utilitaires par rapport à la classe (Of) des motocyclettes, est effectuée la déduction que la qualité de détection du dispositif à capteur (6) diminue.

8. Procédé selon une des revendications précédentes,
**caractérisé en ce qu'**
on contrôle une zone initiale du signal de mesure (M), et on détermine une augmentation de l'amplitude du signal de mesure (M) en tant que l'expression d'une diaphonie initiale, et les variations de celle-ci.

9. Procédé selon la revendication 8,
**caractérisé en ce que**
dans le cas où la diminution dans le temps de l'expression de la diaphonie initiale des amplitudes de signaux de mesure (M) de la série des objets est plus faible que la diminution dans le temps des sections de rétrodiffusion (RCS) déterminées de la série d'objets, on reconnaît une salissure de la carrosserie.

10. Procédé selon la revendication 8 ou 9,
**caractérisé en ce que**
dans le cas où à la fois l'amplitude de l'expression de la diaphonie initiale du signal de mesure (M) de la série d'objets et les sections de rétrodiffusion établies (RCS) de la série des objets d'au moins une classe d'objets deviennent plus faibles, on est en présence d'une détérioration de l'exactitude de mesure du capteur.

11. Procédé selon une des revendications précédentes,
**caractérisé en ce que**
quand on reconnaît un caractère défectueux du capteur et/ou une salissure de la carrosserie, on émet un signal de défaut (F).

12. Procédé selon une des revendications précédentes,
**caractérisé en ce que**
seuls sont examinés les objets (5, 11) se trouvant dans un intervalle de distances prédéfini.

13. Procédé selon une des revendications précédentes,
**caractérisé en ce qu'**
on utilise des signaux internes du véhicule, par exemple des signaux concernant le comportement directionnel ou un taux de rotation du véhicule, pour apprécier si on examine un objet détecté.
